# EUROPEAN PATENT SPECIFICATION

(11) **EP 0 477 265 B1**
(45) Date of publication and mention of the grant of the patent: **11.01.1995**
(21) Application number: 90909813.9
(22) Date of filing: 15.06.1990
(51) Int. Cl.: B62C 1/08

(54) **A TRAINING DEVICE**
ÜBUNGSGERÄT
DISPOSITIF D'EXERCICE

(30) Priority: 16.06.1989 SE 8902169
(43) Date of publication of application: 01.04.1992
(60) Divisional application: 94102393.9
(73) Proprietor: SUNDBERG, Stig, S-818 00 Valbo (SE)
(72) Inventor: SUNDBERG, Stig, S-818 00 Valbo (SE)
(74) Representative: Bjerkén, Jarl Hakan
(86) International application number: SE9000420
(87) International publication number: WO9015746

(56) References cited:
- EP-A- 0 085 962
- DE-C- 3 335 895
- SE-B- 0 420 185
- SE-B- 0 429 948

## Description

This invention is related to a training device comprising at least one wheel rotatable by the training, a fluid pump connected to the wheel and drivable thereby and valve means on the pressure side of the pump for controlling the resistance exerted by the fluid pump to the rotation of the wheel. It is preferred that the device is constituted by a carriage adapted to be driven by a horse, which accordingly is the training.

A carriage of the kind defined hereinabove is previously known by SE, B, 420 185. In the known device said valve means is formed by a regulatable load valve which is stated to be for instance a needle or ball valve. In order to adjust the brake load by means of the fluid pump the driver has to readjust the valve. Furthermore, the valve is stated to have the character of a regulatable choke valve. When a certain choking condition has been adjusted by the driver, this condition remains until the driver carries out readjustment. The present invention is based upon the understanding obtained by thorough physiological studies that such a design does not give rise to any entirely satisfactory training result. The reason therefor is that when the driver has adjusted a certain choking condition for the choke valve, this does not mean that the brake power exerted remains constant in practice during the subsequent braking period. Due to natural circumstances, such as tiredness of the horse, different ground causing different rolling resistance, different inclination of the ground etc, the propelling speed of the carriage will vary considerably. This causes a varying operational speed of the fluid pump, which in turn gives rise to varying flow of fluid. Since the choking condition of the choke valve remains, this will in practice cause a considerable change of the real brake load to occur during the training period. Such a varying braking load does of course give rise to varying resistance to the movement of the horse in the shafts of the carriage. Such variation is extremely unfortunate since it has been found, in said physiological studies, to be essential that the brake power applied on the carriage is generally constant in order to obtain optimal and lenient training of the horse.

Other prior art is represented by SE, B, 429 948. A training carriage is disclosed therein having fluid pumps connected to the axles of carriage wheels. The pumps pump oil from a tank via a regulating valve back to the tank. In order to change braking power, the operator must manually manipulate the regulating valve.

DE, C2, 3 335 895 and EP, A2, 0 085 962 disclose that constant pressure valves are known per se in hydraulic applications although they apparently have not been proposed for the training device field as defined in the pre-characterizing part of claim 1.

### SUMMARY OF THE INVENTION

The object of the present invention is primarily to devise a training device by means of which it should be possible to conduct training as physiologically optimal as possible, i.e. training of such a nature that the resistance exerted by the fluid pump to rotation of the wheel is generally constant; variables such as rotational speed of the wheel, state of wear of the fluid pump and so on should not have any considerable influence on the braking power exerted. Furthermore, braking power should be regulatable rapidly and efficiently.

This primary object is according to the invention primarily obtained by means of what is defined in the characterizing portion of claim 1.

A secondary object of the present invention is to devise a preferable, from the constructional point of view, design of a carriage intended for training horses and comprising at least one wheel, which is rotated when the carriage is driven and which is drivingly connected to a fluid pump adapted to exert a resistance to the rotation of the wheel. More specifically the unfavorable friction dependent driving of the fluid pump proposed in SE, B, 420 185 should thereby be avoided. Furthermore, the design should be such that it becomes economically favourable with regard to the wheel suspension and furthermore, the wheel should be easy to mount and dismount respectively.

This secondary object is obtained by providing the device with the features more specifically defined in the characterizing portion of claim 9. Thanks to this design, the protruding axle of the fluid pump will accordingly operate for axial and radial support of the wheel relative to the fluid pump and thereby relative to the carriage. The axle freely projecting outwardly from the fluid pump at one end means, furthermore, that the wheel readily may be threaded on to the axle and secured by means of one single securing member. Thus, the axle bearings contained in the fluid pump will also operate as bearings for the wheel.

### BRIEF DESCRIPTION OF THE DRAWINGS

With reference to the enclosed drawings, a more close description of an embodiment example of the invention will follow hereinafter.

In the drawings:
Fig 1 is a partially cut view of a portion of a training carriage illustrating the suspension of one of its wheels;
Fig 2 is a diagrammatical view of the fluid circuit according to the invention;
Fig 3 is a diagrammatical view illustrating the design of an electric control unit contained in the training device; and
Fig 4 is a diagrammatical view illustrating control and supervising possibilities of the device and, at the bottom, a training program which can be executed by means of the device.

### DETAILED DESCRIPTION OF A PREFERRED EMBODIMENT

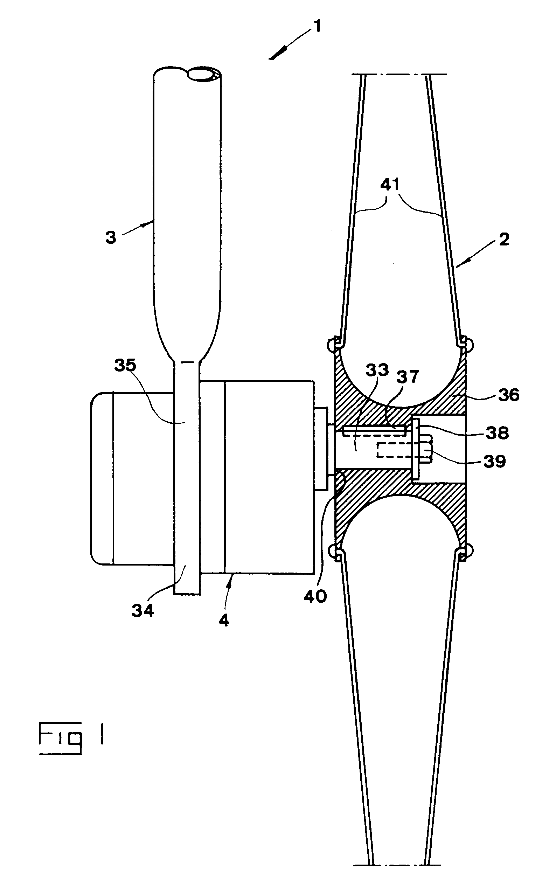

A portion of a training carriage 1 is illustrated in Fig 1, said carriage being intended to be pulled by a horse or other animal to be trained. The carriage is in practice a two-wheeler although only one wheel 2 appears in Fig 1. Furthermore, the carriage comprises a chassis only partially indicated, said chassis being adapted to be connected to the horse by means of shafts or the like and a seat for the driver being arranged on said chassis. The specific design of the carriage is not essential to the concept of the invention; any carriage or sulky design may in principle be used in connection with the invention.

When the carriage is propelled the wheel 2 is put into rotation by its contact with the ground. A fluid pump 4 is connected to the wheel 2 and drivable thereby. In practice, the pump is a hydraulic pump. The hydraulic diagram is more specifically illustrated in Fig 2 and it appears also therefrom that two hydraulic pumps 4 are arranged, namely one for each of the wheels of the carriage.

Valve means 5 are arranged on the pressure side of the pumps for controlling the resistance exerted by the fluid pumps against rotation of the wheels. Said valve means comprise a pressure restriction valve 6 of the automatically operating constant pressure type, i.e. a valve to maintain a generally constant pressure on the pressure side of the pumps 4 independently, at least within a certain pump speed range, of the operational speed and thereby flow of the fluid pump. As appears from Fig 2, the pumps 4 are on their pressure side provided with lines 7, which run together and via a common line section 8 is in communication with the pressure restriction valve 6. It is to be pointed out that said valve is of a design known per se and used within other technical areas.

The suction sides of the pumps 4 communicate, in a manner conventional per se, via lines 9 with a hydraulic oil container 10 arranged at a suitable location on the carriage.

The pressure restriction valve 6 is adjustably designed as to the magnitude of the constant pressure. A manometer 11 is arranged on the pressure side of pumps 4 to deliver information regarding the pressure prevailing in the hydraulic oil volume between pumps 4 and pressure restriction valve 6. It is suitable to have the manometer 11 scaled in such a way that the measurement values which can be read give an appreciation of the traction force, which the braking resistance of the hydraulic pumps 4 give rise to in the shafts of the carriage or in another analogous coupling device between the carriage and the horse. Such a scaling makes it easier for the driver to make, based upon experience, such a correct readjustment of the valve 6 that the desired resistance against displacement of the carriage and being optimal for the training is exerted.

Besides, the valve means 5 comprise a regulatable valve member 12 for relieving the pressure on the pressure side of pumps 4. Said valve member 12 is more specifically constituted by a second regulatable valve arranged parallel to the pressure restriction valve 6, said valve member forcing, in a first closed position, the hydraulic oil on the pressure side of the pumps 4 to pass via the valve 6 and allowing, in a second poen position, hydraulic oil to pass through without having to pass through the pressure restriction valve 6. The valve 12 is accordingly formed by a two position valve being in open or closed position.

On the down stream side of the valves 6 and 12, lines extending from the valves run together into a common line 13, which via a filter 14 delivers the hydraulic oil to container 10. A check valve 15 is in a conventional manner arranged parallel to filter 14 and adapted to open in case the filter 14, e.g. due to clogging, causes a resistance to flow exceeding a certain level.

The valves 6 and 12 are preferably co-ordinated to a valve block indicated by means of the rectangle 15, control members for adjusting the constant pressure level of the pressure restriction valve 6 and for regulating the valve 12 between its two positions being accessibel on the exterior side of said block. In the most simple embodiment, these control members are conceived to he manually operable by the operator or driver. It is then preferred that the valve 12 is of such a design that it remains in one position, into which it has been adjusted by manual actuation, until the valve again is actuated for transfer to the alternative position.

The arrangement of the two position valve 12 has the essential advantage that the braking power may be regulated rapidly and efficiently in the sense that the braking power may be put on and off respectively without any need to carry out readjustment of the valve 6.

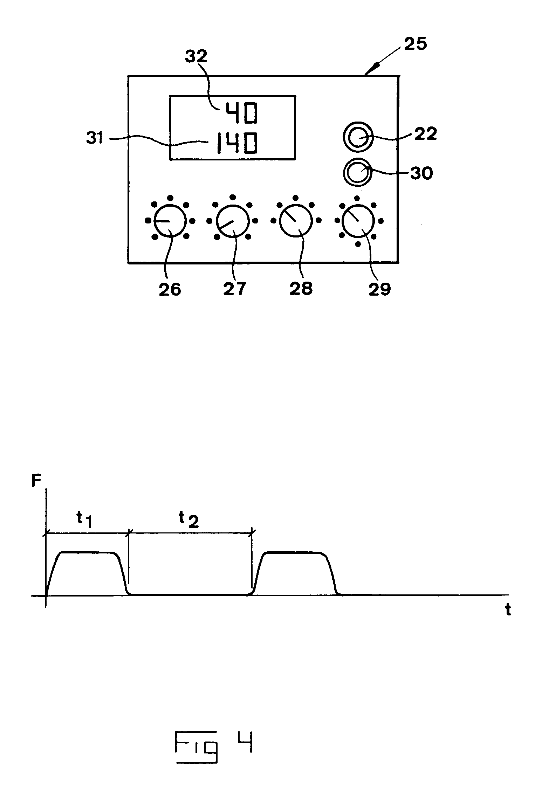

An example of a possible training program is illustrated at the bottom in Fig 4. The abscissa here refers to time whereas the ordinate refers to the braking power F. It may desirable during a first time period t1 to maintain a relatively high braking power so that accordingly the horse must work relatively hard. During this time period, the valve 12 in Fig 2 is accordingly closed whereas the valve 6 in dependence upon its adjustment maintains the braking power generally constant. During a subsequent time period t2 the braking power will then entirely be eliminated so that the horse will get a recovery period. Thus, the valve 12 in Fig 2 is open during this period so that the hydraulic oil flow generated by pumps 4 may flow to container 10 generally without resistance. This means that the resistance exerted in the system according to Fig 2 is generally only constituted by frictional and flow losses in the pumps and lines. Thereafter additional time periods t1, t2 etc will follow. In other words, the training program described will cause an efficient so called interval training which may be executed with a minimum amount of risk for damages on the horse since the horse does not have to conduct the training with a maximum speed.

In order to execute the training program illustrated at the bottom of Fig 4 with a manually controllable embodiment of the device according to the invention, the driver must, accordingly, operate the valve 12 between its two positions with desired intervals. Delays in the system result in the somewhat sloping flanks of the curve in Fig 4 without particular measures. Thereby the transition between the working periods with a high braking power and the recovery periods becomes lenient.

However, it is preferred according to the invention to provide a control unit programmable with a desired training program so that, accordingly, the driver does not have to carry out any adjustment operations during the training program proper provided that the training proceeds in a normal way. However, it is of course possible that the driver must intervene if it turns out that the horse either is not capable of managing the training program in question or has a considerably higher capacity than the one expected. In the former case the driver could reduce the pressure level determined by valve 6 by adjustment thereof and thereby reduce the braking power and in the latter case the braking power could be increased by adjusting valve 6.

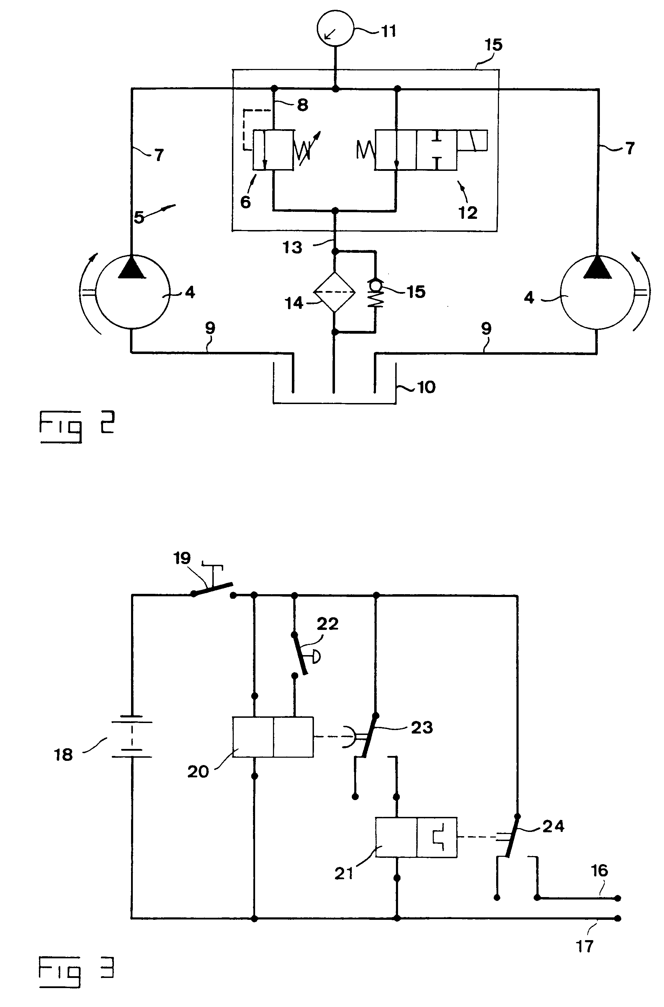

The control unit according to Fig 3 comprises electrical output leads 16, 17 for control signals. These leads are connected to valve 12 so that when voltage is applied on the leads 16 and 17 valve 12 assumes one of its positions whereas in absence of supply voltage on leads 16 and 17 the valve assumes its second position. The device may for instance be such that the valve 12 may be arranged to normally be in its open position as a consequence of the spring diagrammatically indicated in Fig 2. However, when an actuation member associated to valve 12 receives supply voltage via leads 16 and 17 in Fig 3, the actuating member of valve 12 actuates the valve so that it is put into its second position, in which the valve closes hydraulic oil flow. It is to be pointed out that valve 12 of course could be of such a design that it simultaneously is operable manually by the driver and automatically by means of the control circuit illustrated in Fig 3.

The control unit according to Fig 3 receives supply voltage from a battery 18 and comprises suitably a main switch 19. Furthermore, the control unit comprises time regulating members 20, 21 to determine the duration of the entire training program and the duration of successive time periods t1 and t2 with and without braking power application. The control unit comprises a start switch 22, the actuation of which by the driver gives rise to initiation of the training program. The time delay member 20 is so designed that it comprises an adjustment member for adjusting the duration of the training program. Accordingly, when the driver actuates switch 22 the time regulating member 20 is put into operation and it closes then, by means of the switch 23, the current supply to the time regulating member 21, which has the character of a pause-run time relay. More specifically, the time regulating member 21 operates so that it, when it receives supply voltage, operates the switch 24 so that a supply voltage is obtained on leads 16 and 17 and accordingly the valve 12 is adjusted so that braking power application is obtained. Also the time regulating member 21 is adjustable as far as pause time and run time is concerned, i.e. adjustable as concerns t1 and t2 (Fig 4). When the adjusted time for t1 has expired, member 21 opens via switch 24 the current supply via leads 16 and 17 so as to initiate a pause period t2 and valve 12 is then also reversed so as to admit the hydraulic oil flow to pass through. In this way member 21 provides alternating closing and opening respectively of the current supply via leads 16 and 17 until the training program after expiration of the set time is interrupted by the member 21 braking the current supply to the member 21 via switch 23. The switch 24 of member 21 then brakes the supply via leads 16 and 17.

The control unit described and in accordance with Fig 3 has the decisive advantage that an experienced horse trainer in advance may establish the training programs to be executed and less skilled assisting personnel may then take care of the practical driving of the horse during the training program during execution thereof by the control unit according to Fig 3.

It should be pointed out in this connection that it would of course be possible to use, instead of the design of the control unit described in Fig 3, a computer which could be programmed with a great number of different training programs, among which the one aimed at for the time being could be selected.

At the top in Fig 4 a conceivable design of a control panel 25 is illustrated. The panel is located on the carriage so that it is conveniently accessible to the driver. A first control member 26 could have the purpose to enable adjustment of the duration of t1. A second control member 27 could serve for adjustment of the duration of t2. The control member 28 could be adapted to enable adjustment of the braking power during the time period t1, i.e. adjustment of the constant pressure value of valve 6. Finally, control member 29 could have the purpose to enable time adjustment of the duration of an entire training program, i.e. the running time of member 20.

For the rest, the control panel could comprise the switch 22 illustrated in Fig 3, by means of which the training program may be initiated and interrupted respectively. An additional control member 30 could be arranged for manual adjustment of the valve 12 between its positions. The control member 30 could be designed as being in direct mechanical contact with valve 12 or alternatively in indirect electrically operated connection to the valve.

Furthermore, it is preferable that control panel 25 comprises an indicator 31, which is associated to a pulse sensor arranged on the horse and which, accordingly, is adapted to display the pulse for the time being. An additional indicator 32 could be arranged to display the speed of the equipage. Furthermore, the device according to the invention could comprise or be connected to a registration device of the printer type or electronical memory type to be able to store relevant information about the training program. The load conditions illustrated with the assistance of Fig 4 and the pulse of the horse, which is indicative of the strain, are then primarily in view.

The use of the constant pressure valve 6 involves the advantage that the braking power is generally the same independently of the speed of the carriage and independently of the hydraulic pumps 4 being more or less worn. It is neither of any consequence to the actual braking power whether the temperature and accordingly the viscosity of the hydraulic oil varies during the execution of the training program due to heating by friction; the constant pressure valve 6 automatically compensates for such variations.

As appears from Fig 1, wheel 2 is mounted on an axle 33 projecting from the pump 4 and secured against rotation relative to said axle, whereas the body or housing 34 of the pump is attached to the carriage 1, e.g. by a bolt connection penetrating through a plate like portion 35 of the chassis 3 of the carriage. The projecting axle 33 of the pump 4 will thereby operate for axial and radial support of the wheel 2 relative to the pump and thereby relative to the carriage. The axle 33 projecting from the pump with one end allows a very simple mounting of the wheel 2. More specifically, the wheel 2 comprises a hub 36, which may be threaded onto the axle 33 and be secured thereto against relative rotation by means of a key 37 or similar. The internal cavity in the hub 36 comprises portions having two different diameters. A washer 38 contacts a shoulder formed in the transition between these two portions and a screw 39 penetrates the washer, abuts with its head against the washer and engages with its threaded shaft in an internally threaded hole in the extreme end of axle 33. Thus, the hub 36 is actuated towards an abutment 40 on the axle 33 by the screw 39 and washer 38. From what is described it appears that the wheel 2, the rim of which, not illustrated in Fig 1, may be connected to the hub 36 by spokes 41, rapidly and readily may be released from the axle 33 and that the pump 4 itself will act as a bearer of the wheel 2 relative to the chassis of the carriage.

The pump 4 is in the embodiment according to Fig 1 conceived to be secured in a rigid manner to a rigid chassis portion of the carriage. It would of course be possible to secure the pump 4 to such a carriage portion which could be resiliently movably connected to the carriage chassis so that in this way a resilient wheel suspension would be obtained. Said carriage portion could for instance have the character of an arm resiliently pivotable in a vertical plane.

It is evident that numerous modifications of the designs described are possible within the scope of the inventive concept.

## Claims

1. A training device comprising at least one wheel (2) rotatable by the training, a fluid pump (4) connected to the wheel and drivable thereby and valve means (5) on the pressure side of the pump for controlling the resistance exerted by the fluid pump to the rotation of the wheel, *characterized* by said valve means comprising a pressure restriction valve (6) of automatically operating constant pressure type, i.e. a valve for maintaining a generally constant pressure on the pressure side of the fluid pump (4) independently, at least within a certain pump speed interval, of the operational speed and thereby flow of the fluid pump, and by said valve means further comprising regulatable valve members (12) for relieving pressure on the pressure side of the fluid pump.

2. A device according to claim 1, *characterized* in that it comprises a carriage.

3. A device according to claim 2, *characterized* in that the carriage is adapted to be driven by a horse constituting the training.

4. A device according to claim 2 or 3, *characterized* in that the carriage has two wheels and that each of its wheels is arranged to drive a respective fluid pump (4).

5. A device according to any preceding claim, *characterized* in that the pressure restriction valve (6) is adjustably designed as to the magnitude of the constant pressure.

6. A device according to any preceding claim, *characterized* in that a second regulatable valve (12) is arranged parallel to the pressure restriction valve (6) and adapted to force, in a first closed position, the fluid on the pressure side of the pump to pass via the pressure restriction valve and adapted to, in a second open position, admit fluid to pass through without the fluid having to pass through the pressure restriction valve.

7. A device according to any preceding claim, *characterized* in that it comprises a control unit programmable with a desired training program comprising braking power application, which varies in time, on the wheel by means of the resistance of the fluid pump, and that the control unit is connected to the second valve (12) to control the execution of the training program by regulating the second valve.

8. A device according to claim 7, *characterized* in that the control unit comprises time regulating members (20, 21) for determining the length of the training program and the length of successive periods of time with and without braking power application.

9. A device according to at least claims 1-3, *characterized* in that the wheel (2) is mounted on an axle projecting from the fluid pump (4) and secured against relative rotation thereto whereas a body or housing (34) of the fluid pump is attached to the carriage, whereby the projecting axle (33) of the fluid pump operates for axial and radial support of the wheel relative to the fluid pump and thereby relative to the carriage.

## Patentansprüche

1. Trainingsgerät mit wenigstens einem Rad (2), das beim Trainieren drehbar ist, mit einer Flüssigkeitspumpe (4), die an das Rad angeschlossen und hierbei antreibbar ist, und mit einem Ventil (5) auf der Druckseite der Pumpe zum Steuern des von der Flüssigkeitspumpe gegenüber der Umdrehung des Rades ausgeübten Widerstandes,
dadurch gekennzeichnet, daß das Ventil ein Druckbegrenzungsventil (6) vom automatisch arbeitenden Konstant-Druck-Typus aufweist, d.h. ein Ventil zum Beibehalten eines im wesentlichen konstanten Druckes auf der Druckseite der Flüssigkeitspumpe (4), unabhängig wenigstens innerhalb eines gewissen Pumpendrehzahlintervalls von der Arbeitsgeschwindigkeit und damit vom Durchsatz der Flüssigkeitspumpe, und daß das Ventil weiterhin ein einstellbares Ventilelement (12) zum Freigeben des Druckes auf der Druckseite der Flüssigkeitspumpe aufweist.

2. Gerät nach Anspruch 1, dadurch gekennzeichnet, daß es einen Wagen umfaßt.

3. Gerät nach Anspruch 2, dadurch gekennzeichnet, daß der Wagen derart gestaltet ist, daß er zur Durchführung des Trainings von einem Pferd gezogen wird.

4. Gerät nach Anspruch 2 oder 3, dadurch gekennzeichnet, daß der Wagen zwei Räder hat, und daß jedes Rad dazu vorgesehen ist, eine entsprechende Flüssigkeitspumpe (4) anzutreiben.

5. Gerät nach einem der vorausgegangenen Ansprüche, dadurch gekennzeichnet, daß das Druckbegrenzungsventil (6) justierbar gestaltet ist, bezüglich der Größe des konstanten Druckes.

6. Gerät nach einem der vorausgegangenen Ansprüche, dadurch gekennzeichnet, daß ein zweites einstellbares Ventil (12) parallel zum Druckbegrenzungsventil (6) angeordnet und derart gestaltet ist, daß es in einer ersten geschlossenen Position die Flüssigkeit auf der Druckseite der Pumpe durch das Druckbegrenzungsventil hindurchdrückt und in einer zweiten Position der Flüssigkeit ein Hindurchtreten erlaubt, ohne daß die Flüssigkeit durch das Druckbegrenzungsventil hindurchtreten muß.

7. Gerät nach einem der vorausgegangenen Ansprüche, dadurch gekennzeichnet, daß es eine Steuereinheit aufweist, die für ein gewünschtes Trainingsprogramm programmierbar ist, umfassend die Bremskraftaufbringung, die sich über der Zeit auf das Rad mittels des Widerstandes der Flüssigkeitspumpe ändert, und daß die Steuereinheit an das zweite Ventil (12) angeschlossen ist, um die Durchführung des Trainingsprogrammes durch Einstellen des zweiten Ventiles zu steuern.

8. Gerät nach Anspruch 7, dadurch gekennzeichnet, daß die Steuereinheit ein Zeitschaltwerk (20, 21) zum Festlegen der zeitlichen Länge des Trainingsprogrammes und der zeitlichen Länge aufeinanderfolgender Perioden mit und ohne Bremskraftaufbringung umfaßt.

9. Gerät nach wenigstens einem der Ansprüche 1-3, dadurch gekennzeichnet, daß das Rad (2) auf einer Welle gelagert ist, die von der Flüssigkeitspumpe 4 absteht und hiermit drehfest verbunden ist, während ein Gehäuse (34) der Flüssigkeitspumpe am Wagen befestigt ist, wobei die vorstehende Welle (33) der Flüssigkeitspumpe als axiales und radiales Lager des Rades relativ zur Flüssigkeitspumpe und damit relativ zum Wagen dient.

## Revendications

1. Dispositif d'entraînement comprenant au moins une roue (2) susceptible d'être entraînée en rotation, une pompe à fluide (4) reliée à la roue et apte à être commandée par celle-ci et des moyens à valves (5) du côté du refoulement du fluide de la pompe pour commander la résistance exercée par la pompe à fluide sur la rotation de la roue, caractérisé en ce que lesdits moyens à valves comprennent une valve (6) de limitation de pression du type opérant automatiquement une pression constante, c'est-à-dire une valve destinée à maintenir une pression sensiblement constante du côté du refoulement du fluide de la pompe à fluide, au moins dans une certaine gamme de vitesse de la pompe, indépendamment de la vitesse opérationnelle et donc du débit de la pompe à fluide et en ce que lesdits moyens à valves comprennent de plus des moyens (12) à valves régulatrices pour relâcher la pression du côté du refoulement du fluide de la pompe à fluide.

2. Dispositif selon la revendication 1, caractérisé en ce qu'il comprend un chariot.

3. Dispositif selon la revendication 2, caractérisé en ce que le chariot est adapté pour être tiré par un cheval constituant la force d' entraînement du chariot.

4. Dispositif selon la revendication 2 ou 3, caractérisé en ce que le chariot a deux roues et en ce que chacune de ses roues est disposée pour entraîner une pompe à fluide (4) respective.

5. Dispositif selon l'une des revendications précédentes, caractérisé en ce que la valve (6) de limitation de pression est conçue de manière à ce qu'elle soit ajustée à la valeur de la pression constante.

6. Dispositif selon l'une des revendications précédentes, caractérisé en ce qu'une seconde valve (12) régulatrice est disposée en parallèle sur la valve de limitation de la pression (6) et apte à forcer, dans une première position fermée, le fluide du côté du refoulement du fluide de la pompe, à passer par la valve de limitation de la pression et apte, dans une seconde position ouverte, à permettre le passage du fluide sans qu'il ait à passer à travers la valve de limitation de la pression.

7. Dispositif selon l'une des revendications précédentes, caractérisé en ce qu' il comprend une unité de commande programmable, avec un programme d'entraînement déterminé comprenant l'application d'une force de freinage qui varie avec le temps sur la roue au moyen de la résistance de la pompe à fluide, et en ce que l'unité de commande est reliée à la seconde valve (12) pour commander l'exécution du programme d'entraînement en réglant la seconde valve.

8. Dispositif selon la revendication 7, caractérisé en ce que l'unité de contrôle comprend des organes (20,21) de réglage temporel afin de déterminer la longueur du programme d'entraînement et la longueur des périodes successives de temps avec ou sans application de force de freinage.

9. Dispositif selon au moins les revendications 1 - 3, caractérisé en ce que la roue (2) est montée sur un axe faisant saillie par rapport à la pompe à fluide (4) et en ce que la rotation par rapport à celle-ci est empêchée tandis qu'un corps ou logement (34) de la pompe à fluide est fixé au chariot, l'axe (33) faisant saillie par rapport à la pompe à fluide jouant le rôle de support axial et radial de la roue relativement à la pompe à fluide et de cette façon relativement au chariot.
